# EUROPEAN PATENT APPLICATION

(11) **EP 3 021 586 A1**
(43) Date of publication of application: **18.05.2016**
(21) Application number: 14823575.7
(22) Date of filing: 07.07.2014
(51) Int. Cl.: H04N 19/30

(54) **METHOD AND APPARATUS FOR PROCESSING VIDEO SIGNAL**

(30) Priority: 07.07.2013 US 201361843424 P
(71) Applicant: Wilus Institute of Standards and Technology Inc., Seoul 137-894 (KR)
(72) Inventor: OH, Hyunoh, Gwacheon-si Gyeonggi-do 427-739 (KR)
(74) Representative: Frenkel, Matthias Alexander
(86) International application number: PCT/KR2014/006043
(87) International publication number: WO 2015/005621

(57) **Abstract**

The present invention provides a method and an apparatus for processing a video signal, and more particularly, a method and an apparatus for processing a video signal, which encode and decode the video signal.

To this end, the present invention provides a method for processing a video signal, including: receiving a scalable video signal including a base layer and an enhancement layer; receiving a flag indicating whether tiles are used in the enhancement layer; when the flag indicating whether the tiles are used indicates that a picture referring to a corresponding video parameter set includes a plurality of tiles, receiving a flag indicating whether a loop filter is applied across the tiles and a flag indicating whether tile boundaries of layers are aligned with each other; and decoding pictures of the enhancement layer based on the received values of the flag indicating whether the loop filter is applied across the tiles and the flag indicating whether the tile boundaries of the layers are aligned with each other and an apparatus for processing a video signal using the same.

## Description

### CROSS-REFERENCE TO RELATED APPLICATIONS

This application claims priority to and the benefit of US Provisional Application No. 61/843,424 filed on July 7, 2014, the entire contents of which are incorporated herein by reference.

### TECHNICAL FIELD

The present invention relates to a method and an apparatus for processing a video signal, and more particularly, to a method and an apparatus for processing a video signal, which encode and decode the video signal.

### BACKGROUND ART

Compressive coding means a series of signal processing technologies for transmitting digitalized information through a communication line or storing the digitalized information in a form suitable for a storage medium. Objects of the compressive coding include a voice, an image, a character, and the like and in particular, a technology that performs compressive coding the image is called video image compression. Compressive coding of a video signal is achieved by removing redundant information by considering a spatial correlation, a temporal correlation, a probabilistic correlation, and the like. However, with the recent development of various media and data transmission media, a method and an apparatus of video signal processing with higher-efficiency are required.

Meanwhile, in recent years, with a change of a user environment such as network condition or a resolution of a terminal in various multimedia environments, a demand for a scalable video coding scheme for hierarchically providing video contents has increased in spatial, temporal, and/or image quality terms.

### DISCLOSURE

### TECHNICAL PROBLEM

The present invention has been made in an effort to increase coding efficiency of a video signal. In particular, the present invention has been made in an effort to provide an efficient coding method of a scalable video signal.

### TECHNICAL SOLUTION

An exemplary embodiment of the present invention provides a method for processing a video signal, including: receiving a scalable video signal including a base layer and an enhancement layer; receiving a flag indicating whether tiles are used in the enhancement layer; when the flag indicating whether the tiles are used indicates that a picture referring to a corresponding video parameter set includes a plurality of tiles, receiving a flag indicating whether a loop filter is applied across tiles and a flag indicating whether tile boundaries of layers are aligned with each other; and decoding pictures of the enhancement layer based on the received values of the flag indicating whether the loop filter is applied across the tiles and the flag indicating whether the tile boundaries of the layers are aligned with each other.

Another exemplary embodiment of the present invention provides an apparatus for processing a video signal, including: a demultiplexer receiving a scalable video signal including a base layer and an enhancement layer; a base layer decoder decoding pictures of the base layer; and an enhancement layer decoder decoding pictures of the enhancement layer by using the decoded picture of the base layer, wherein the enhancement layer decoder receives a flag indicating whether tiles are used in the enhancement layer, receives, when the flag indicating whether the tiles are used indicates that a picture referring to a corresponding video parameter set includes a plurality of tiles, a flag indicating whether a loop filter is applied across the tiles and a flag indicating whether tile boundaries of layers are aligned with each other, and decodes the pictures of the enhancement layer based on received values of the flag indicating whether the loop filter is applied across the tiles and the flag indicating whether the tile boundaries of the layers are aligned with each other.

### ADVANTAGEOUS EFFECTS

According to exemplary embodiments of the present invention, inter-layer prediction can be efficiently supported with respect to a scalable video signal using a multi-loop decoding scheme.

### DESCRIPTION OF DRAWINGS

FIG. 1 is a schematic block diagram of a video signal encoder according to an exemplary embodiment of the present invention.
FIG. 2 is a schematic block diagram of a video signal decoder according to an exemplary embodiment of the present invention.
FIG. 3 is a diagram illustrating one example of dividing a coding unit according to an exemplary embodiment of the present invention.
FIG. 4 is a diagram illustrating an exemplary embodiment of a method that hierarchically shows a division structure of FIG. 3.
FIG. 5 is a diagram illustrating prediction units having various sizes and forms according to an exemplary embodiment of the present invention.
FIG. 6 is a diagram illustrating an exemplary embodiment in which one picture is partitioned into a plurality of slices.
FIG. 7 is a diagram illustrating an exemplary embodiment in which one picture is partitioned into a plurality of tiles.
FIG. 8 is a schematic block diagram of a scalable video coding system according to an exemplary embodiment of the present invention.
FIG. 9 is a diagram illustrating an example of bitstreams of two layers in which tile structures are aligned with each other.
FIG. 10 is a diagram illustrating a part of syntax in a bitstream according to an exemplary embodiment of the present invention.
FIG. 11 is a diagram illustrating a part of syntax in a bitstream according to another exemplary embodiment of the present invention.
FIG. 12 is a diagram illustrating a part of syntax in a bitstream according to yet another exemplary embodiment of the present invention.

### BEST MODE

Terms used in the specification adopt general terms which are currently widely used as possible by considering functions in the present invention, but the terms may be changed depending on an intention of those skilled in the art, customs, and emergence of new technology. Further, in a specific case, there is a term arbitrarily selected by an applicant and in this case, a meaning thereof will be described in a corresponding description part of the invention. Accordingly, it should be revealed that a term used in the specification should be analyzed based on not just a name of the term but a substantial meaning of the term and contents throughout the specification.

A following term may be analyzed based on the following criterion and even a term which is not described may be analyzed according to the following intent. In some cases, coding may be interpreted as encoding or decoding and information is a terms including all of values, parameters, coefficients, elements, and the like and since in some cases, a meaning of the information may be differently interpreted, the present invention is not limited thereto. A 'unit' is used as a meaning that designates a basic unit of image (picture) processing or a specific location of the picture and in some cases, may be used while being mixed with a term such as a 'block', a 'partition', or an 'area'. Further, in the specification, the unit can be used as a concept including all of a coding unit, a prediction unit, and a transform unit.

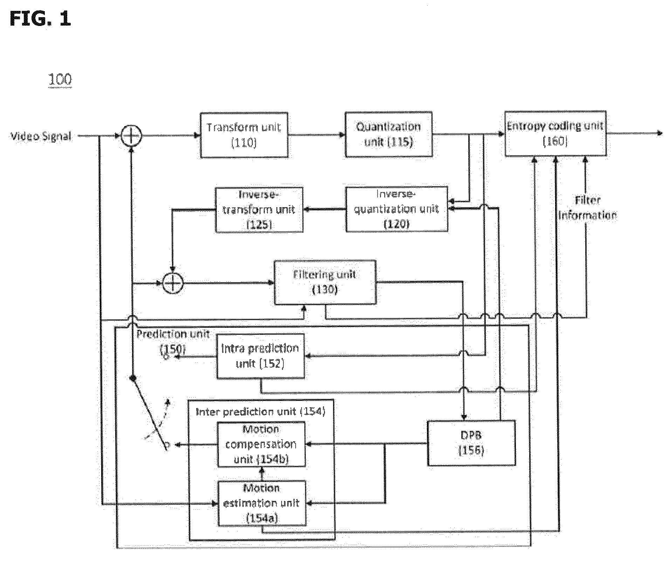

FIG. 1 is a schematic block diagram of a video signal encoding apparatus according to an exemplary embodiment of the present invention. Referring to FIG. 1, the encoding apparatus 100 of the present invention generally includes a transform unit 110, a quantization unit 115, an inverse-quantization unit 120, an inverse-transform unit 125, a filtering unit 130, a prediction unit 150, and an entropy coding unit 160.

The transform unit 110 obtains transform coefficient values by transforming pixel values of a received video signal. For example, discrete cosine transform (DCT) or wavelet transform may be used. In particular, in the discrete cosine transform, an input picture signal is partitioned into block forms having a predetermined size to be transformed. Coding efficiency may vary depending on distributions and characteristics of values in a transform area in the transformation.

The quantization unit 115 quantizes the transform coefficient values output from the transformation unit 110. The inverse-quantization unit 120 inversely quantizes the transformation coefficient values and the inverse-transform unit 125 restores original pixel values by using the inversely quantized transform coefficient values.

The filtering unit 130 performs a filtering operation for enhancing the quality of the restored picture. For example, the filtering unit 130 may include a deblocking filter and an adaptive loop filter. The filtered picture is stored in a decoded picture buffer 156 to be output or used as a reference picture.

In order to increase the coding efficiency, a method of predicting the picture by using an already coded area through the prediction unit 150 and acquiring the restored picture by adding residual values between an original picture and the predicted picture to the predicted picture is used instead of coding the picture signal as it is. An intra prediction unit 152 performs intra prediction in a current picture and an inter prediction unit 154 predicts the current picture by using the reference picture stored in the decoded picture buffer 156. The intra prediction unit 152 performs the intra prediction from restored areas in the current picture to transfer intra-encoded information to the entropy coding unit 160. The inter prediction unit 154 may be configured to include a motion estimation unit 154a and a motion compensation unit 154b. The motion estimation unit 154a acquires a motion vector value of a current area by referring to a restored specific area. The motion estimation unit 154a transfers positional information (a reference frame, a motion vector, and the like) of the reference area to the entropy coding unit 160 to be included in a bitstream. The motion compensation unit 154b performs inter-picture motion compensation by using the motion vector value transferred from the motion estimation unit 154a.

The entropy coding unit 160 entropy-codes the quantized transform coefficient, the inter-encoded information, the intra-encoded information, and the reference area information input from the inter prediction unit 154 to generate a video signal bitstream. Herein, in the entropy coding unit 160, a variable length coding (VLC) scheme and arithmetic coding may be used. In the variable length coding (VLC) scheme, input symbols are transformed to a consecutive codeword and the length of the codeword may be variable. For example, symbols which are frequently generated are expressed by a short codeword and symbols which are not frequently generated are expressed by a long codeword. As the variable length coding scheme, a context-based adaptive variable length coding (CAVLC) scheme may be used. In the arithmetic coding, consecutive data symbols are transformed to one decimal and in the arithmetic coding, an optimal decimal bit required to express each symbol may be acquired. As the arithmetic coding, context-based adaptive binary arithmetic code (CABAC) may be used.

The generated bitstream is capsulized by using a network abstraction layer (NAL) unit as a basic unit. The NAL unit includes an encoded slice segment and the slice segment is constituted by integer number of coding tree units. A video decoder needs to first separate the bitstream into the NAL units and thereafter, decode the respective separated NAL units in order to decode the bitstream.

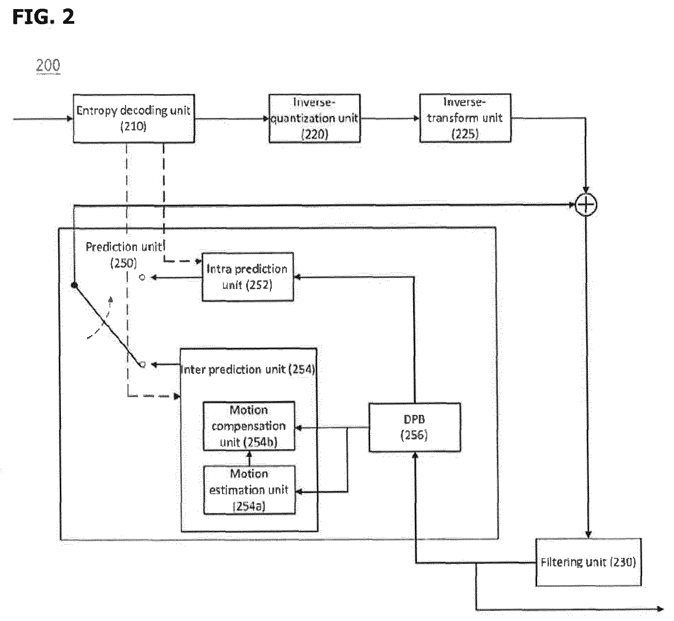

FIG. 2 is a schematic block diagram of a video signal decoding apparatus 200 according to an exemplary embodiment of the present invention. Referring to FIG. 2, the decoding apparatus 200 of the present invention generally includes an entropy decoding unit 210, an inverse-quantization unit 220, an inverse-transform unit 225, a filtering unit 230, and a prediction unit 250.

The entropy decoding unit 210 entropy-decodes a video signal bitstream to extract the transform coefficient, the motion vector, and the like for each area. The inverse-quantization unit 220 inversely quantizes the entropy-decoded transform coefficient and the inverse-transform unit 225 restores original pixel values by using the inversely quantized transform coefficient.

Meanwhile, the filtering unit 230 improves the image quality by filtering the picture. Herein, the filtering unit 230 may include a deblocking filter for reducing a block distortion phenomenon and/or an adaptive loop filter for removing distortion of the entire picture. The filtered picture is stored in a decoded picture buffer 256 to be output or used as a reference picture for a next frame.

The prediction unit 250 of the present invention includes an intra prediction unit 252 and an inter prediction unit 254 and restores a prediction picture by using information such as an encoding type, the transform coefficient for each area, the motion vector, and the like decoded through the aforementioned entropy decoding unit 210.

In this regard, the intra prediction unit 252 performs intra prediction from decoded samples in the current picture. The inter prediction unit 254 generates the prediction picture by using the reference picture stored in the decoded picture buffer 256 and the motion vector. The inter prediction unit 254 may be configured to include a motion estimation unit 254a and a motion compensation unit 254b. The motion estimation unit 254a acquires the motion vector representing the positional relationship between a current block and a reference block of the reference picture used for coding and transfers the acquired motion vector to the motion compensation unit 254b.

Prediction values output from the intra prediction unit 252 or the inter prediction unit 254 and pixel values output from the inverse-transform unit 225 are added to generate a restored video frame.

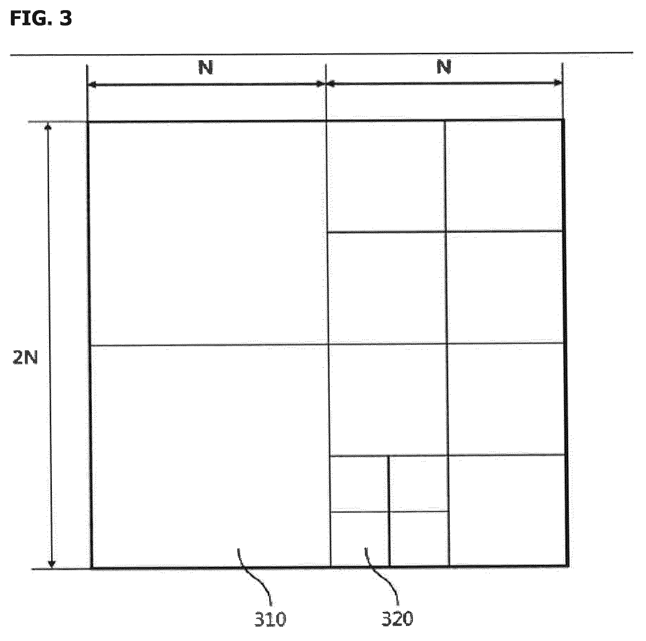

Hereinafter, in operations of the encoding apparatus 100 and the decoding apparatus 200, a method for partitioning a coding unit and a prediction unit will be described with reference to FIGS. 3 to 5.

The coding unit means a basic unit for processing the picture during the aforementioned processing process of the video signal such as the intra/inter prediction, the transformation, the quantization and/or the entropy coding. The size of the coding unit used in coding one picture may not be constant. The coding unit may have a quadrangular shape and one coding unit may be partitioned into several coding units again.

FIG. 3 is a diagram illustrating one example of partitioning a coding unit according to an exemplary embodiment of the present invention. For example, one coding unit having a size of 2N X 2N may be partitioned into four coding units having a size of N X N again. The coding unit may be recursively partitioned and all coding units need not be partitioned in the same pattern. However, for easy coding and processing processes, the maximum size of a coding unit 32 and/or the minimum size of a coding unit 34 may be limited.

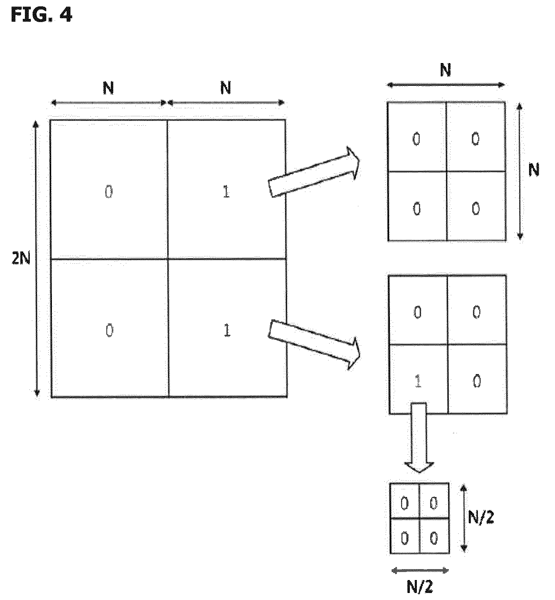

In regards to one coding unit, information indicating whether the corresponding coding unit is partitioned may be stored. FIG. 4 is a diagram illustrating an exemplary embodiment of a method that hierarchically shows a partition structure of the coding unit illustrated in FIG. 3 by using a flag value. As the information indicating whether the coding unit is partitioned, when the corresponding unit is partitioned, a value of '1' may be allocated and when the corresponding unit is not partitioned, a value of '0' may be allocated. As illustrated in FIG. 4, when a flag value indicating whether the coding unit is partitioned is 1, a coding unit corresponding to a relevant node may be partitioned into 4 coding units again and when the flag value is 0, the coding unit is not partitioned any longer and a processing process for the corresponding coding unit may be performed.

The structure of the coding unit may be expressed by using a recursive tree structure. That is, regarding one picture or the coding unit having the maximum size as a root, the coding unit partitioned into other coding units has child nodes as many as the partitioned coding units. Therefore, a coding unit which is not partitioned any longer becomes a leaf node. When it is assumed that one coding unit may be partitioned only in a square shape, since one coding unit may be partitioned into a maximum of four different coding units, a tree representing the coding unit may be formed in a quard tree shape.

In an encoder, the optimal size of the coding unit may be selected according to a characteristic (e.g., resolution) of a video picture or by considering the coding efficiency, and information on the selected optimal size or information which may derive the selected optimal size may be included in the bitstream. For example, the maximum size of the coding unit and the maximum depth of the tree may be defined. When the coding unit is partitioned in the square shape, since the height and the width of the coding unit is half as small as the height and the width of the coding unit of a parent node, the minimum coding unit size may be acquired by using the information. Alternatively, on the contrary, the minimum coding unit size and the maximum depth of the tree are predefined and used and the maximum coding unit size may be derived and used by using the predefined minimum coding unit size and maximum tree depth. In the square partition, since the size of the unit varies in the form of a multiple of 2, the actual coding unit size is expressed by a log value having 2 as the base to increase transmission efficiency.

In a decoder, information indicating whether a current coding unit is partitioned may be acquired. When the information is acquired (transmitted) only under a specific condition, efficiency may be increased. For example, since it is a partitionable condition of the current coding unit that a size acquired by adding a current coding unit size at a current position is smaller than the size of the picture and the current coding unit size is larger than a predetermined minimum coding unit size, the information indicating whether the current coding unit is partitioned may be acquired only in this case.

When the information indicates that the coding unit is partitioned, the sizes of the coding units to be partitioned are half as small as the current coding unit and the coding unit is partitioned into four square coding units based on a current processing position. The processing may be repeated with respect to each of the partitioned coding units.

Picture prediction (motion compensation) for coding is performed with respect to the coding unit (that is, the leaf node of the coding unit tree) which is not partitioned any longer. Hereinafter, a basic unit that performs the prediction will be referred to as a prediction unit or a prediction block.

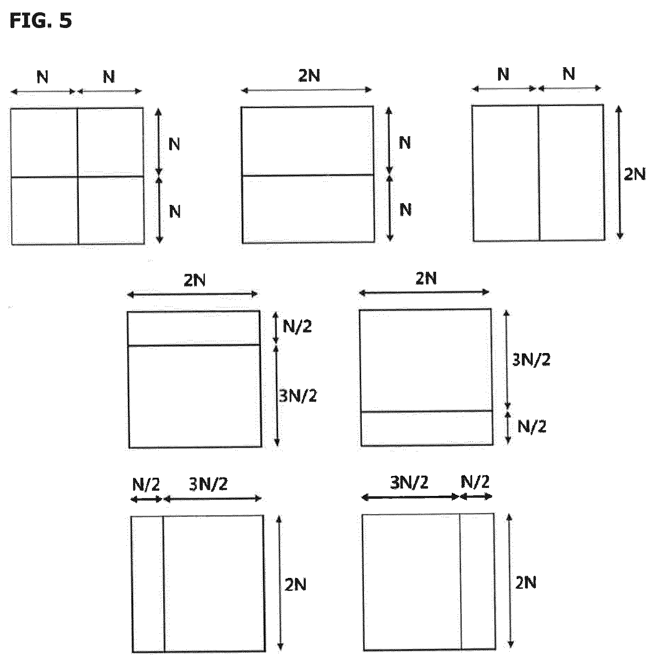

FIG. 5 is a diagram illustrating prediction units having various sizes and forms according to an exemplary embodiment of the present invention. The prediction units may have shapes including a square shape, a rectangular shape, and the like in the coding unit. For example, one prediction unit may not be partitioned (2N X 2N) or may be partitioned to have various sizes and shapes including N X N, 2N X N, N X 2N, 2N X N/2, 2N X 3N/2, N/2 X 2N, 3N/2 X 2N, and the like as illustrated in FIG. 5. Further, a partitionable form of the prediction unit may be defined differently in the intra coding unit and the inter coding unit. For example, in the intra coding unit, only partitioning having the form of 2N X 2N or N X N is available and in the inter coding unit, all forms of partitioning which is mentioned above may be configured to be available. In this case, the bitstream may include information indicating whether the prediction unit is partitioned or information indicating which form the prediction unit is partitioned in. Alternatively, the information may be derived from other information.

Hereinafter, a term called the unit used in the specification may be used as a term which substitutes for the prediction unit as the basic unit that performs prediction. However, the present invention is not limited thereto and the unit may be, in a broader sense, appreciated as a concept including the coding unit.

A current picture in which the current unit is included or decoded portions of other pictures may be used in order to restore the current unit in which decoding is performed. A picture (slice) using only the current picture for restoration, that is, performing only the intra prediction is referred to as an intra picture or an I picture (slice) and a picture (slice) that may perform both the intra prediction and the inter prediction is referred to as an inter picture (slice). A picture (slice) using a maximum of one motion vector and reference index is referred to as a predictive picture or a P picture (slice) and a picture (slice) using a maximum of two motion vectors and reference indexes is referred to as a bi-predictive picture or a B picture (slice), in order to predict each unit in the inter picture (slice).

The intra prediction unit performs intra prediction of predicting pixel values of a target unit from restored areas in the current picture. For example, pixel values of the current unit may be predicted from encoded pixels of units positioned at the upper end, the left side, the upper left end and/or the upper right end based on the current unit.

Meanwhile, the inter prediction unit performs inter prediction of predicting the pixel values of the target unit by using information of not the current picture but other restored pictures. In this case, a picture used for prediction is referred to as the reference picture. During the inter prediction, which reference area is used to predict the current unit may be expressed by using index and motion vector information indicating the reference picture including the corresponding reference area.

The inter prediction may include forward direction prediction, backward direction prediction, and bi-prediction. The forward direction prediction means prediction using one reference picture displayed (alternatively, output) temporally before the current picture and the backward direction prediction means prediction using one reference picture displayed (alternatively, output) temporally after the current picture. To this end, one set of motion information (e.g., the motion vector and reference picture index) may be required. In the bi-prediction scheme, a maximum of two reference areas may be used and two reference areas may exist in the same reference picture or in each of different pictures. That is, in the bi-prediction scheme, a maximum of 2 sets of motion information (e.g., the motion vector and reference picture index) may be used and two motion vectors may have the same reference picture index or different reference picture indexes. In this case, the reference pictures may be displayed (alternatively, output) temporally both before and after the current picture.

The reference unit of the current unit may be acquired by using the motion vector and reference picture index. The reference unit exists in the reference picture having the reference picture index. Further, pixel values or interpolated values of a unit specified by the motion vector may be used as prediction values (predictor) of the current unit. For motion prediction having pixel accuracy per sub-pixel, for example, an 8-tab interpolation filter and a 4-tab interpolation filter may be used with respect to luminance samples (luma samples) and chrominance samples (chroma samples), respectively. As described above, by using motion information, motion compensation that predicts a texture of the current unit from a previously decoded picture is performed.

Meanwhile, a reference picture list may be constituted by pictures used for the inter prediction with respect to the current picture. In the case of B picture, two reference picture lists are required and hereinafter, the respective reference picture lists are designated by reference picture list 0 (alternatively, L0) and reference picture list 1 (alternatively, L1).

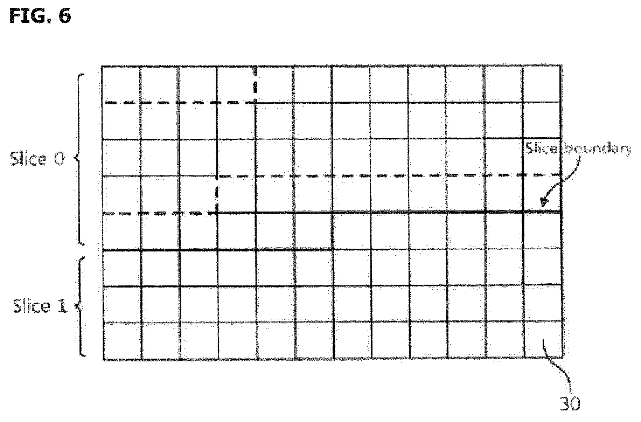

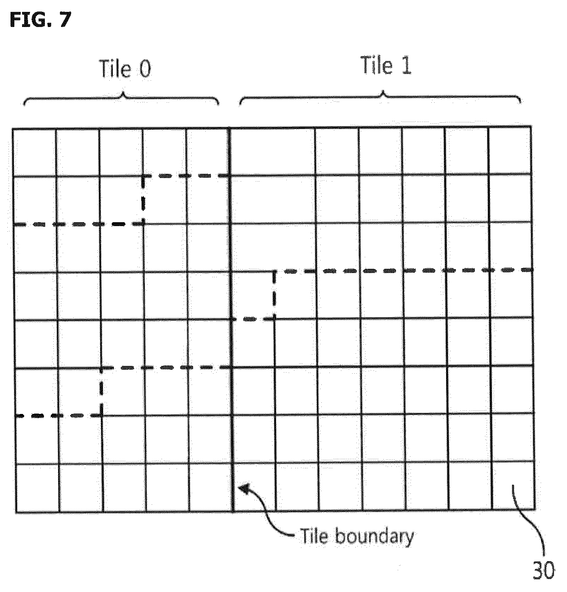

One picture may be divided into the slices, slice segments, tiles, etc. The slice indicates horizontal partition of the picture and the tile indicates the horizontal and/or vertical partition of the picture. FIGS. 6 and 7 illustrate various exemplary embodiments in which the picture is partitioned.

First, FIG. 6 illustrates an exemplary embodiment in which one picture is partitioned into a plurality of slices (slice 0 and slice 1). In FIG. 6, a thick line represents a slice boundary and a dotted line represents a slice segment boundary.

The slice may be constituted by one independent slice segment or constituted by a set of one independent slice segment and at least one dependent slice segment which is continuous with the independent slice segment. The slice segment is a sequence of a coding tree unit (CTU) 30. That is, the independent or dependent slice segment is constituted by at least one CTU 30.

According to the exemplary embodiment of FIG. 6, one picture is partitioned into two slices, that is, slice 0 and slice 1. Between them, slice 0 is constituted by a total of three slice segments, that is, the independent slice segment including 4 CTUs, the dependent slice segment including 35 CTUs, and another dependent slice segment including 15 CTUs. Further, slice 1 is constituted by one independent slice segment including 42 CTUs.

Next, FIG. 7 illustrates an exemplary embodiment in which one picture is partitioned into a plurality of tiles (tile 0 and tile 1). In FIG. 7, a thick line represents a tile boundary and a dotted line represents the slice segment boundary.

The tile is the sequence of the CTUs 30 similarly to the slice and has the rectangular shape. According to the exemplary embodiment of FIG. 7, one picture is partitioned into two tiles, that is, tile 0 and tile 1. Further, in FIG. 7, the corresponding picture is constituted by one slice and includes one independent slice segment and four continuous dependent slice segments. Although not illustrated in FIG. 7, one tile may be partitioned into a plurality of slices. That is, one tile may be constituted by the CTUs included in one or more slices. Similarly, one slice may be constituted by the CTUs included in one or more tiles. However, each slice and tile needs to satisfy at least one of the following conditions. i) All CTUs included in one slice belong to the same tile. ii) All CTUs included in one tile belong to the same slice. As such, one picture may be partitioned into the slice and/or tile and each partition (slice and tile) may be encoded or decoded in parallel.

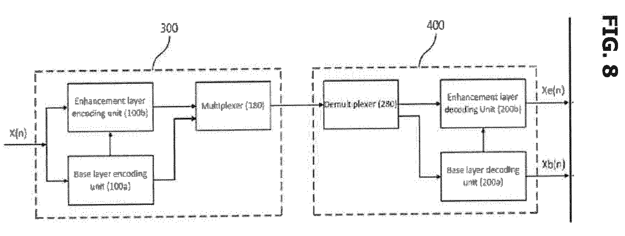

FIG. 8 is a schematic block diagram of a scalable video coding (alternatively, scalable high-efficiency video coding) system according to an exemplary embodiment of the present invention.

The scalable video coding scheme is a compression method for hierarchically providing video contents in spatial, temporal, and/or image quality terms according to various user environments such as a situation of a network or a resolution of a terminal in various multimedia environments. Spatial scalability may be supported by encoding the same picture with different resolutions for each layer and temporal scalability may be implemented by controlling a screen playback rate per second of the picture. Further, quality scalability encodes quantization parameters differently for each layer to provide pictures with various image qualities. In this case, a picture sequence having lower resolution, the number of frames per second and/or quality is referred to as a base layer, and a picture sequence having relatively higher resolution, the number of frames per second and/or quality is referred to as an enhancement layer.

Hereinafter, a configuration of the scalable video coding system of the present invention will be described in more detail with reference to FIG. 8. The scalable video coding system includes an encoding apparatus 300 and a decoding apparatus 400. The encoding apparatus 300 may include a base layer encoding unit 100a, an enhancement layer encoding unit 100b, and a multiplexer 180 and the decoding apparatus 400 may include a demultiplexer 280, a base layer decoding unit 200a, and an enhancement layer decoding unit 200b. The base layer encoding unit 100a compresses an input signal X(n) to generate a base bitstream. The enhancement layer encoding unit 100b may generate an enhancement layer bitstream by using the input signal X(n) and information generated by the base layer encoding unit 100a. The multiplexer 180 generates a scalable bitstream by using the base layer bitstream and the enhancement layer bitstream.

Basic configurations of the base layer encoding unit 100a and the enhancement layer encoding unit 100b may be the same as or similar to that of the encoding apparatus 100 illustrated in FIG. 1. However, the inter prediction unit of the enhancement layer encoding unit 100b may perform inter prediction by using motion information generated by the base layer encoding unit 100a. Further, a decoded picture buffer (DPB) of the enhancement layer encoding unit 100b may sample and store the picture stored in the decoded picture buffer (DPB) of the base layer encoding unit 100a. The sampling may include resampling, upsampling, and the like as described below.

The generated scalable bitstream may be transmitted to the decoding apparatus 400 through a predetermined channel and the transmitted scalable bitstream may be partitioned into the enhancement layer bitstream and the base layer bitstream by the demultiplexer 280 of the decoding apparatus 400. The base layer decoding unit 200a receives the base layer bitstream and restores the received base layer bitstream to generate an output signal Xb(n). Further, the enhancement layer decoding unit 200b receives the enhancement layer bitstream and generates an output signal Xe(n) by referring to the signal restored by the base layer decoding unit 200a.

Basic configurations of the base layer decoding unit 200a and the enhancement layer decoding unit 200b may be the same as or similar to those of the decoding apparatus 200 illustrated in FIG. 2. However, the inter prediction unit of the enhancement layer decoding unit 200b may perform inter prediction by using motion information generated by the base layer decoding unit 200a. Further, a decoded picture buffer (DPB) of the enhancement layer decoding unit 200b may sample and store the picture stored in the decoded picture buffer (DPB) of the base layer decoding unit 200a. The sampling may include resampling, upsampling, and the like.

Meanwhile, in the scalable video coding, interlayer prediction may be used for efficient prediction. The interlayer prediction means predicting a picture signal of a higher layer by using motion information, syntax information, and/or texture information of a lower layer. In this case, the lower layer referred for encoding the higher layer may be referred to as a reference layer. For example, the enhancement layer may be coded by using the base layer as the reference layer.

The reference unit of the base layer may be scaled up or down through sampling. The sampling may mean changing image resolution or quality. The sampling may include the resampling, downsampling, the upsampling, and the like. For example, intra samples may be resampled in order to perform the interlayer prediction. Alternatively, pixel data is regenerated by using a downsampling filter to reduce the image resolution and this is referred to as the downsampling. Alternatively, additional pixel data is generated by using an upsampling filter to increase the image resolution and this is referred to as the upsampling. A term called the sampling in the present invention may be appropriately analyzed according to the technical spirit and the technical scope of the exemplary embodiment.

A decoding scheme of the scalable video coding generally includes a single-loop scheme and a multi-loop scheme. In the single-loop scheme, only pictures of a layer to be actually reproduced are decoded and other pictures except the intra unit in the lower layer are not decoded. Therefore, in the enhancement layer, the motion vector, the syntax information, and the like of the lower layer may be referred, but texture information for other units except the intra unit may not be referred. Meanwhile, the multi-loop scheme is a scheme that restores both the layer to be currently reproduced and the lower layer. Accordingly, all texture information may be referred in addition to the syntax information of the lower layer by using the multi-loop scheme.

The reference layer according to the exemplary embodiment of the present invention includes a direct reference layer and an indirect reference layer. The direct reference layer indicates a layer directly used for the interlayer prediction of another higher layer. Further, the indirect reference layer indicates a layer not directly used but indirectly used for the interlayer prediction of another higher layer. That is, the indirect reference layer includes a direct or indirect reference layer for the direct reference layer of the corresponding higher layer.

Meanwhile, in the scalable video coding, each of both one layer and the reference layer (that is, the enhancement layer and the base layer) of the corresponding layer may be partitioned into a plurality of slices and/or a plurality of tiles. As described above, each of the slice and tile is constituted by a set of CTUs having the same size. In the specification, a term called "partition" may be used as a concept including both the slice and the tile partitioning the picture. In this case, a situation in which partition structures (alternatively, boundaries) of the pictures in a plurality of layers or all layers are aligned with each other may frequently occur.

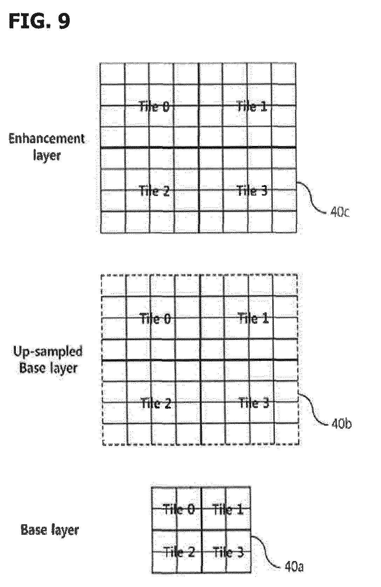

FIG. 9 is a diagram illustrating an example of bitstreams of two layers in which tile structures are aligned with each other. Respective pictures illustrated in FIG. 9 illustrate a base layer picture 40a, an upsampled base layer picture 40b, and an enhancement layer picture 40c from the bottom. In addition, each picture is partitioned into 4 tiles.

When collocated samples of reference layers each corresponding to any two samples positioned in the same tile in one layer are also positioned in the same tile, the tile structures of the layers are aligned with each other. Accordingly, the following conditions need to be satisfied in order to align tile structures of two or more layers with each other.
i) The numbers of tiles need to be the same as each other in the respective pictures of the layers.
ii) When any two samples are positioned in the same tile in one layer, collocated samples in the reference layer corresponding to the relevant samples need to be also positioned in the same tile.

In the scalable video coding, when the tile structures of the layers are aligned with each other, efficient parallel processing is available. The tiles at the same location in each layer are able to be allocated to the same processing core of a decoder to be processed. For example, when it is assumed that the decoder includes 4 processing cores, tiles having the same identifier in the base layer picture 40a and the enhancement layer picture 40c of FIG. 9 may be processed by the same core. Therefore, the processing may be performed sequentially form a tile positioned on the lower layer (that is, the base layer).

Moreover, when the tile structures of the inter-layer pictures are the same as each other, information on the tile structure of the higher layer may not be transmitted to the decoder redundantly. The reason is that the tile structure of the corresponding higher layer may be simply predicted from a tile structure of a dependent layer or a reference layer nearest to the corresponding layer.

According to the exemplary embodiment of the present invention, various information associated with the inter-layer tile structure may be included in the bitstream. The information may be included in a video parameter set (VPS), a sequence parameter set (SPS), a picture parameter set (PPS), or extended data thereof or included in supplemental enhancement information (SEI). Alternatively, the information may be included in data of video usability information of the video parameter set (VPS_VUI).

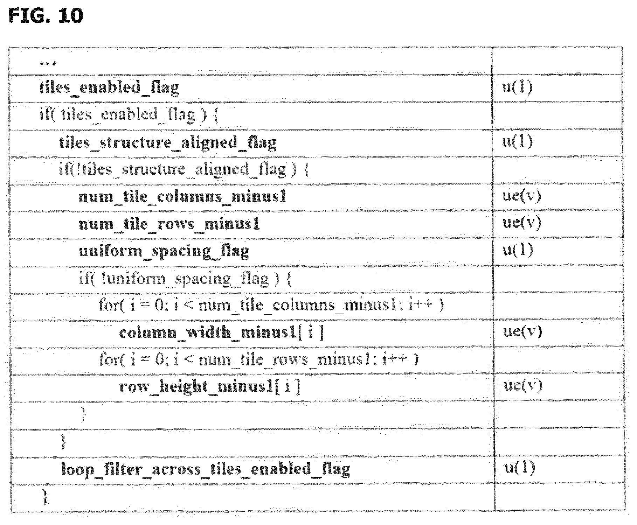

FIG. 10 is a diagram illustrating a part of syntax in a bitstream according to an exemplary embodiment of the present invention. The syntaxes of FIG. 10 will be described below in detail.

First, according to the exemplary embodiment of the present invention, a decoding apparatus may receive a 'flag indicating whether the tiles are used' ('tiles_enabled_flag'). The 'flag indicating whether the tiles are used' ('tiles_enabled_flag') indicates whether an associated picture includes a plurality of tiles and may be included in i) the PPS, extended data thereof (that is, a PPS level) and/or ii) the VPS, extended data thereof, the VPS_VUI (that is, a VPS level), and the like. In detail, when 'tiles_enabled_flag' is included in the PPS level, the flag may indicate whether each picture referring to the corresponding PPS includes a plurality of tiles. When the flag value is 1, each picture referring to the corresponding PPS may include a plurality of tiles. However, when the flag value is 0, each picture referring to the corresponding PPS may include only one tile. Similarly, when 'tiles_enabled_flag' is included in the VPS level, the flag may indicate whether each picture referring to the corresponding VPS includes a plurality of tiles. According to the exemplary embodiment, the flag may hierarchically indicate whether the associated picture includes a plurality of tiles, for example, the 'flag indicating whether the tiles are used' may be included in each of the PPS level and the VPS level. The 'flag indicating whether the tiles are used' of the VPS level may indicate a value of the 'flag indicating whether the tiles are used' of each PPS, which is referred by at least one picture referring to the corresponding VPS.

When 'tiles_enabled_flag' indicates that the associated picture includes a plurality of tiles, the decoding apparatus may receive a 'flag indicating whether the tile boundaries of layers are aligned with each other' ('tiles_structure_aligned_flag') and a 'flag indicating whether a loop filter is applied across tiles' ('loop_filter_across_tiles_enabled_flag').

The 'flag indicating whether the tile boundaries of layers are aligned with each other' ('tiles_structure_aligned_flag') indicates whether a tile boundary (alternatively, structure) of current layer pictures is aligned with a tile boundary (alternatively, structure) of direct reference layer pictures. In detail, in the case where a value of 'tiles_structure_aligned_flag' is 1, when any two samples of the current layer picture belong to the same tile, collocated samples of a reference layer picture each corresponding thereto need to also belong to the same tile. Further, when any two samples of the current layer picture belong to different tiles, collocated samples of the reference layer picture each corresponding thereto need to belong to different tiles. In the case where the value of `tiles_structure_aligned_flag' is 0, such a restriction may not be applied. When 'tiles_structure_aligned_flag' information does not exist in the bitstream, the corresponding flag may be inferred to be 0.

According to the exemplary embodiment of the present invention, a higher layer (non-base layer) in which the layer identifier is more than 0 may have one or more direct reference layers. In this case, 'tiles_structure_aligned_flag' may indicate whether tile boundaries of a particular higher layer and each direct reference layer corresponding thereto are aligned with each other. A detailed exemplary embodiment thereof will be described below.

When 'tiles_structure_aligned_flag' is 0, the decoding apparatus may receive 'information of the number of tile columns' ('num_tile_columns_minus1'), 'information of the number of tile rows' ('num_tile_rows_minus1'), and a 'flag indicating whether a spacing of the tile boundary is uniform' ('uniform_spacing_flag').

The 'information of the number of tile columns' (`num_tile_columns_minus1') and the 'information of the number of tile rows' ('num_tile_rows_minus1') indicate the number of columns and the number of rows of the tiles partitioning the picture, respectively. According to the exemplary embodiment, when 'tiles_structure_aligned_flag' is 1, the 'num_tile_columns_minus1' and the 'num_tile_rows_minus1' may be inferred to have values which are the same as the corresponding values by referring to 'num_tile_columns_minus1' and 'num_tile_rows_minus1' of the direct reference layer, respectively.

Next, the 'flag indicating whether a spacing of the tile boundary is uniform' ('uniform_spacing_flag') indicates whether a column spacing and a row spacing of the tile boundary are uniform across the picture. When the flag value is 1, the flag value indicates that the column spacing and the row spacing of the tile boundary are uniformly distributed. When the flag value is 0, the flag value of 0 indicates that the column spacing and/or the row spacing of the tile boundary are not uniformly distributed and the width of each column and the height of each row may be directly signaled through 'information of the width of the tile column' (column_width_minus1[i]) and 'information of the height of the tile row' (row_heignt_minus1[i]), respectively.

The 'information of the width of the tile column' ('column_width_minus [i]') indicates the width of an i-th tile column and the 'information of the height of the tile row' ('row_heignt_minus1[i]') indicates the height of an i-th tile row. In this case, values of 'column_width_minus1[i]' and 'row_height_minus1[i]' may be expressed by units of CTU. When 'tiles_structure_aligned_flag' is 1 and 'uniform_spacing_flag' is 0, each of 'column_width_minus1[i]' and 'row_height_minus1 [i]' may be inferred from information of the direct reference layer. That is, current 'column_width_minus1[i]' may be obtained by scaling a picture width ratio of a current layer and the direct reference layer to the 'column_width_minus1[i]' value of the direct reference layer. Similarly, current 'row_height_minus1[i]' may be obtained by scaling a picture height ratio of the current layer and the direct reference layer to the 'row_height_minus1[i]' value of the direct reference layer.

Meanwhile, the 'flag indicating whether the loop filter is applied across the tiles' ('loop_filter_across_tiles_enabled_flag') indicates whether in-loop filtering across the tile boundary may be performed in the associated picture. The in-loop filter is a filter applied to a restored picture for generating a picture to be output to the reproduction apparatus and to be inserted into the decoded picture buffer. The in-loop filter includes a deblocking filter and a sample adaptive offset (SAO) filter. 'loop_filter_across_tiles_enabled_flag' may be included in i) the PPS, the extended data thereof (that is, the PPS level) and/or ii) the VPS, the extended data thereof, the VPS_VUI (that is, the VPS level), and the like as described above. When 'loop_filter_across_tiles_enabled_flag' is included in the PPS level, the flag may indicate whether the in-loop filtering across the tile boundary may be performed in pictures referring to the corresponding PPS. When the flag value is 1, the in-loop filtering across the tile boundary may be performed in the pictures referring to the corresponding PPS. However, when the flag value is 0, the in-loop filtering across the tile boundary may not be performed in the pictures referring to the corresponding PPS. Similarly, when 'loop_filter_across_tiles_enabled_flag' is included in the VPS level, the flag may indicate whether the in-loop filtering across the tile boundary may be performed in pictures referring to the corresponding VPS. According to the exemplary embodiment, the flag may hierarchically indicate whether the in-loop filtering across the tile boundary may be performed, in other words, the 'flag indicating whether the loop filter is applied across the tiles' may be included in each of the PPS level and the VPS level. The 'flag indicating whether the loop filter is applied across the tiles' of the VPS level may indicate a value of the 'flag indicating whether the loop filter is applied across the tiles' of each PPS, which is referred to by at least one picture referring to the corresponding VPS.

The decoding apparatus of the present invention may perform the in-loop filtering based on the flag value acquired by the aforementioned method. Meanwhile, in the exemplary embodiment of FIG. 10 and an exemplary embodiment described below, information indicated by each flag value 0 or 1 may be defined reversely. That is, in the present invention, the value indicated by each flag is just an exemplary embodiment for describing the present invention and the present invention is not limited thereto.

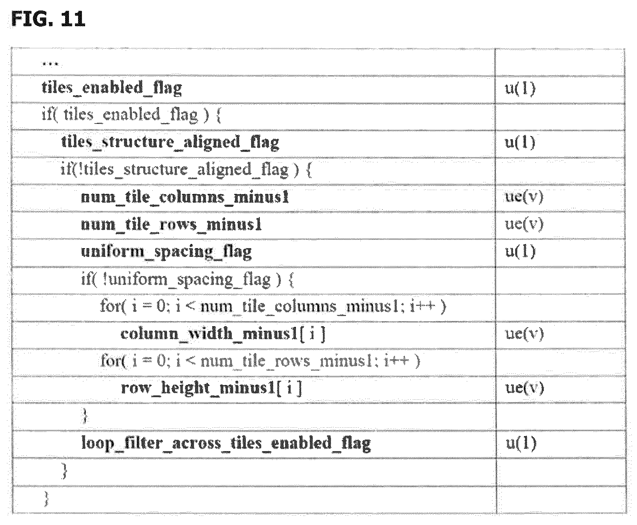

FIG. 11 is a diagram illustrating a part of syntax in a bitstream according to another exemplary embodiment of the present invention. In the exemplary embodiment of FIG. 11, a duplicated description of parts which are the same as or equivalent to the exemplary embodiment of FIG. 10 will be omitted.

According to the exemplary embodiment of FIG. 11, the 'flag indicating whether the loop filter is applied across the tiles' ('loop_filter_across_tiles_enabled_flag') may be received when the 'flag indicating whether the tile boundaries of layers are aligned with each other' ('tiles_structure_aligned_flag') is 0. That is, the corresponding flag may be received only when the tile boundaries of the current layer picture and the direct reference layer picture do not aligned with each other. When the tile boundaries of the current layer picture and the direct reference layer picture are aligned with each other, the 'loop_filter_across_tiles_enabled_flag' value may be set to be the same as the 'loop_filter_across_tiles_enabled_flag' value of the nearest direct reference layer.

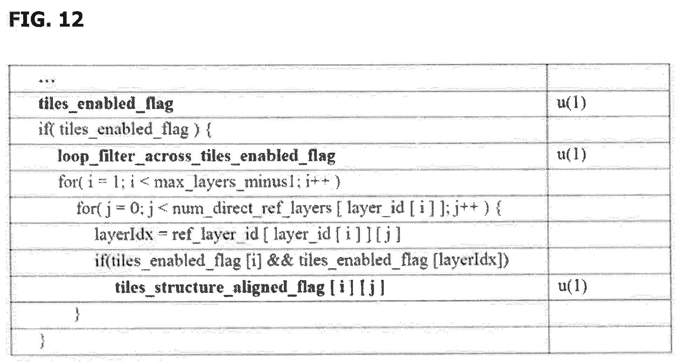

FIG. 12 is a diagram illustrating a part of syntax in a bitstream according to yet another exemplary embodiment of the present invention. In the exemplary embodiment of FIG. 12, a duplicated description of parts which are the same as or equivalent to the exemplary embodiment of FIG. 10 will be omitted.

As described above, the decoding apparatus of the present invention may receive a 'flag indicating whether the tiles are used' ('tiles_enabled_flag') and receive the 'flag indicating whether the loop filter is applied across the tiles' ('loop_filter_across_tiles_enabled_flag') and the 'flag indicating whether the tile boundaries of layers are aligned with each other' ('tiles_structure_aligned_flag[i][j]') based on the corresponding flag value. That is, the decoding apparatus may receive 'loop_filter_across_tiles_enabled_flag' and 'tiles_structure_aligned_flag[i][j]' when 'tiles_enabled_flag' indicates that the associated picture includes a plurality of tiles.

As described above, the 'flag indicating whether the loop filter is applied across the tiles' ('loop_filter_across_tiles_enabled_flag') indicates whether in-loop filtering across the tile boundary may be performed in the associated picture. The flag may be included in the PPS level and/or the VPS level and when the flag is included in both levels, the corresponding flags may hierarchically indicate whether the in-loop filtering across the tile boundary is performed. A detailed exemplary embodiment thereof has been illustrated in FIG. 10.

In addition, the decoding apparatus receives the 'flag indicating whether the tile boundaries of layers are aligned with each other' ('tiles_structure_aligned_flag[i][j]'). According to the exemplary embodiment of the present invention, a higher layer (non-base layer) in which the layer identifier is more than 0 may have one or more direct reference layers. In this case, 'tiles_structure_aligned_flag[i][j]' may indicate whether tile boundaries of a particular higher layer (alternatively, enhancement layer) and each direct reference layer corresponding thereto are aligned with each other.

In more detail, with respect to each higher layer (non-base layer) in which the layer identifier is more than 0 ('1 <= i < max_layers_minus1'), layer identifiers `layerIdx' of the direct reference layer are acquired as many as the number of direct reference layers 'num_direct_ref_layers[layer_id[i]]' of the corresponding layer. Next, the 'flag indicting whether the tiles are used' (that is, 'tiles_enabled_flag[i]' and 'tiles_enabled_flag[layerIdx]') in each layer is verified by using the layer identifier 'i' of the higher layer and the layer identifier `layerIdx' of the direct reference layer. When both `tiles_enabled_flag[i]' and 'tiles_enabled_flag[layerIdx]' satisfy 1, the decoding apparatus may receive the 'flag indicating whether the tile boundaries of layers are aligned with each other' ('tiles_structure_aligned_flag[i][j]') between the corresponding higher layer and the direct reference layer corresponding thereto. Herein, 'tiles_structure_aligned_flag[i][j]' indicates whether the tile boundaries of the enhancement layer in which the layer identifier is 'i' and a 'j'-th direct reference layer of the corresponding layer are aligned with each other.

Hereinabove, although the present invention has been described through detailed exemplary embodiments, those skilled in the art can modify and change the present invention without departing from the intent and the scope of the present invention. Accordingly, it is analyzed that a matter which those skilled in the art can easily analogize from the detailed description and the exemplary embodiments of the present invention belongs to the scope of the present invention.

### MODE FOR INVENTION

As above, various embodiments have been described in the best mode.

### INDUSTRIAL APPLICABILITY

The present invention can be applied for processing and outputting a video signal.

## Claims

1. A method for processing a video signal, the method comprising:
receiving a scalable video signal including a base layer and an enhancement layer;
receiving a flag indicating whether tiles are used in the enhancement layer;
when the flag indicating whether the tiles are used indicates that a picture referring to a corresponding video parameter set includes a plurality of tiles, receiving a flag indicating whether a loop filter is applied across tiles and a flag indicating whether tile boundaries of layers are aligned with each other; and
decoding pictures of the enhancement layer based on the received values of the flag indicating whether the loop filter is applied across the tiles and the flag indicating whether the tile boundaries of the layers are aligned with each other.

2. The method of claim 1, wherein the flag indicating whether the tile boundaries of the layers are aligned with each other indicates whether tile boundaries of the enhancement layer and at least one direct reference layer of the corresponding enhancement layer are aligned with each other.

3. The method of claim 2, wherein the flag indicating whether the tile boundaries of the layers are aligned with each other is received when both of the flag indicating whether the tiles are used in the enhancement layer and a flag indicating whether tiles are used in the direct reference layer indicate that a plurality of tiles are used.

4. The method of claim 1, wherein the flag indicating whether the loop filter is applied across the tiles indicates whether in-loop filtering across the tile boundary is performed in pictures referring to the corresponding video parameter set.

5. An apparatus for processing a video signal, comprising:
a demultiplexer receiving a scalable video signal including a base layer and an enhancement layer;
a base layer decoder decoding pictures of the base layer; and
an enhancement layer decoder decoding pictures of the enhancement layer by using the decoded picture of the base layer,
wherein the enhancement layer decoder receives a flag indicating whether tiles are used in the enhancement layer, receives, when the flag indicating whether the tiles are used indicates that a picture referring to a corresponding video parameter set includes a plurality of tiles, a flag indicating whether a loop filter is applied across the tiles and a flag indicating whether tile boundaries of layers are aligned with each other, and decodes the pictures of the enhancement layer based on received values of the flag indicating whether the loop filter is applied across the tiles and the flag indicating whether the tile boundaries of the layers are aligned with each other.
